# EUROPÄISCHE PATENTSCHRIFT

(11) **EP 4 450 197 B1**
(45) Veröffentlichungstag und Bekanntmachung des Hinweises auf die Patenterteilung: **24.12.2025**
(21) Anmeldenummer: 23169043.9
(22) Anmeldetag: 20.04.2023
(51) Int. Cl.: G01B 11/24, B23F 23/12, B23Q 17/24

(54) **VERFAHREN ZUR VERZAHNUNGSMESSUNG**
METHOD FOR MEASURING TOOTHING
PROCÉDÉ DE MESURE DE DENTURE

(43) Veröffentlichungstag der Anmeldung: 23.10.2024
(73) Patentinhaber: Klingelnberg GmbH, 42499 Hückeswagen (DE)
(72) Erfinder: Stefer, Jonas, 51688 Wipperfürth (DE); Finkeldey, Markus, 45527 Hattingen (DE)
(74) Vertreter: Janke Scholl Patentanwälte PartG mbB

(56) Entgegenhaltungen:
- WO-A1-2021/069390
- DE-A1- 102016 006 957
- DE-A1- 102016 108 236
- DE-A1- 102019 107 188
- JP-B2- 4 136 475

## Beschreibung

Die vorliegende Erfindung betrifft ein Verfahren zur Verzahnungsmessung.

Bauteile, die eine Verzahnung aufweisen, wie z.B. Zahnräder, werden gemessen, um die Qualität der hergestellten Verzahnung zu überprüfen. Die Verzahnungsmessung kann zwischen den einzelnen Bearbeitungsschritten stattfinden, d.h. z.B. nach einer Weichbearbeitung und/oder nach einer Hartfeinbearbeitung.

Das Dokument DE 10 2016 006 957 A1 beschreibt ein Verfahren zur taktilen Verzahnungsmessung. Die taktile Verzahnungsmessung wird mittels eines Messtasters durchgeführt, der beispielsweise eine Tastkugel hat. Während der taktilen Messung wird die Tastkugel des Messtasters mit den Zahnflanken der zu messenden Verzahnung in Anlage gebracht, um einzelne Messwerte aufzunehmen oder um einen Messweg entlang einer jeweiligen Zahnflanke abzufahren.

Gemäß dem Dokument DE 10 2016 006 957 A1 erschweren Vorschubmarkierungen, die infolge der Weichbearbeitung einer Verzahnung durch Wälzfräsen entstehen, die taktile Messung eines solches wälzgefrästen, vorverzahnten Bauteils. Insbesondere für sehr schmale Verzahnungen besteht gemäß DE 10 2016 006 957 A1 die Gefahr, dass der Messtaster, der gezielt in einem Tal einer Vorschubmarkierung geführt wird, während der Messung seitlich aus dem Zahnkontakt geführt wird und den Kontakt zur Zahnflanke verliert. Um dies zu vermeiden, werden gemäß DE 10 2016 006 957 A1 Sprungbewegungen ausgeführt, die den Messtaster zurück in die Zahnmitte in ein benachbartes Tal einer benachbarten Vorschubmarkierung einer jeweiligen Zahnflanke versetzen, um ein Herauslaufen des Tasters aus der Zahnlücke zu vermeiden.

Die im Dokument DE 10 2016 006 957 A1 beschriebene Vorgehensweise hat den Nachteil, dass das Ausführen der Sprungbewegung zeitintensiv ist und, je nach Zahnform, eine Vielzahl zusätzlicher Messbewegungen erfordert.

Es ist bekannt, dass statt der taktilen Verzahnungsmessung optische Messsysteme verwendet werden, um eine zügigere Messung von Verzahnungen zu ermöglichen. Die Dokumente DE 10 2019 107 188 A1 und EP 4 012 329 A1, die auf die Anmelderin zurückgehen, beschreiben Verfahren zur optischen Messung von Verzahnungen, die eine Anpassung der optischen Messung an die Verzahnung sowie eine optimierte Auswertung optisch erfasster Messwerte angeben.

Bezüglich der optischen Messung war anzunehmen, dass die in DE 10 2016 006 957 A1 für die taktile Messung diskutierten Herausforderungen der Messtasterführung für die Lösungen der optischen Messung gemäß DE 10 2019 107 188 A1 und EP 4 012 329 A1 keine Rolle spielen, da im Rahmen der optischen Messung kein Kontakt zwischen der Verzahnung und dem optischen Messwertaufnehmer besteht.

Es hat sich jedoch gezeigt, dass auch die optische Messung durch die Vorschubmarkierungen der Weichbearbeitung bzw. des Vorverzahnens beeinträchtigt wird, so dass weitere, über die Lehre der Dokumente DE 10 2019 107 188 A1 und EP 4 012 329 A1 hinausgehende Anpassungen der optischen Messung erforderlich sind, um eine zuverlässige optische Messung eines vorverzahnten Bauteils zu ermöglichen.

Untersuchungen der Anmelderin haben ergeben, dass die optische Messung beispielsweise durch die variierenden Antastwinkel beeinträchtigt wird, die sich aus der wannenförmigen Kontur der Vorschubmarkierungen ergeben. D.h. je nachdem, an welcher Stelle ein optischer Messstrahl auf die jeweilige Vorschubmarkierung trifft, ergibt sich ein jeweils anderer Antastwinkel, den die Oberfläche der Zahnflanke mit der optischen Achse des optischen Messsystems einschließt.

Der Antastwinkel hat einen entscheidenden Einfluss auf die Qualität der Abbildung eines Messpunkts mittels des optischen Messsystems, so dass die Qualität der Abbildung verschiedener Messpunkte stark variiert und Messwerte ggf. unbrauchbar sind, je nachdem, an welcher Höhenposition einer Vorschubmarkierung der betreffende Messpunkt erfasst worden ist.

Je nach zu erfassender Messgröße wird das Messergebnis zudem durch die Vorschubmarkierungen verfälscht, soweit nicht bekannt ist, ob der betreffende Messwert einem Berg oder einem Tal der jeweiligen Vorschubmarkierung zuzuordnen ist. So können z.B. die Ergebnisse einer Teilungsmessung verfälscht werden.

Eine ähnliche Problemstellung ergibt sich für die sogenannten Hüllschnittabweichungen. In der Literatur wird für das Wälzfräsen häufig zwischen Hüllschnittabweichungen und Vorschubmarkierungen unterschieden. Die Unterscheidung zwischen Hüllschnittabweichungen und Vorschubmarkierungen wird in der Figurenbeschreibung näher erläutert.

Grundsätzlich ergeben sich sowohl die Hüllschnittabweichungen als auch die Vorschubmarkierungen daraus, dass die perfekte, z.B. evolventische Zahnform in kontinuierlichen Verzahnverfahren mit geometrisch bestimmter Schneide aufgrund der endlichen Anzahl von Schneiden nicht erreicht, sondern nur angenähert werden kann. So verbleibt immer eine Abweichung, die sich aus der Aneinanderreihung einer endlichen Anzahl von Einzelschnitten der Schneiden entlang der zu fertigenden Zahnflanken ergibt.

Die Hüllschnittabweichungen und Vorschubmarkierungen werden nachfolgend unter dem Oberbegriff "Bearbeitungsmarkierungen" zusammengefasst. Der Oberbegriff der Bearbeitungsmarkierungen umfasst dabei nicht nur die üblicherweise dem Wälzfräsen zugeordneten Begriffe der Hüllschnittabweichungen und Vorschubmarkierungen, sondern auch alle diejenigen Strukturen oder Abweichungen einer Zahnflanke, die sich aus anderen kontinuierlichen Verzahnverfahren mit geometrisch bestimmter Schneide ergeben, wie z.B. dem Wälzschälen.

Der vorliegenden Erfindung liegt die technische Problemstellung zugrunde, ein verbessertes Verfahren zum optischen Messen einer Bearbeitungsmarkierungen aufweisenden Verzahnung anzugeben.

Die voranstehend beschriebene, technische Problemstellung wird durch ein Verfahren gemäß Anspruch 1 gelöst. Weitere Ausgestaltungen der Erfindung ergeben sich aus den abhängigen Ansprüchen und der nachstehenden Beschreibung.

Erfindungsgemäß wird ein Verfahren angegeben, mit den Verfahrensschritten: Bereitstellen eines Bauteils, wobei das Bauteil eine Verzahnung aufweist, wobei Zahnflanken der Verzahnung Bearbeitungsmarkierungen aufweisen, wobei die Bearbeitungsmarkierungen durch eine Herstellung der Zahnflanken mittels eines kontinuierlichen spanabhebenden Verzahnverfahrens unter Verwendung eines Werkzeugs mit geometrisch bestimmten Schneiden erzeugt worden sind, wie Wälzfräsen, Wälzschälen oder dergleichen, wobei die Bearbeitungsmarkierungen an jeder der Zahnflanken ein jeweiliges Oberflächenprofil mit Bergen und Tälern ausbilden, das jeweils durch den periodischen Eingriff der Schneiden während des kontinuierlichen spanabhebenden Verzahnverfahrens an den jeweiligen Zahnflanken erzeugt worden ist, wobei eine Position von Bergen und Tälern der Bearbeitungsmarkierungen in Zahnbreitenrichtung flankenspezifisch ist, wobei die Berge und Täler benachbarter Zahnflanken bezüglich ihrer flankenspezifischen Position in Zahnbreitenrichtung relativ zueinander einen Versatz aufweisen und wobei der Versatz infolge eines axialen Vorschubs des Werkzeugs in Zahnbreitenrichtung während des kontinuierlichen spanabhebenden Verzahnverfahrens erzeugt worden ist; Bestimmung mindestens eines geometrischen Merkmals der Bearbeitungsmarkierungen, wie der flankenspezifischen Positionen der Berge und Täler, dem Versatz oder dergleichen; Durchführung einer optischen Messung der Verzahnung des Bauteils, wobei ein Verlauf eines Messwegs für die optische Messung und/oder wobei Positionen von Messpunkten für die optische Messung unter Berücksichtigung des geometrischen Merkmals der Bearbeitungsmarkierungen definiert werden und/oder wobei eine Auswertung von Messwerten der optischen Messung unter Berücksichtigung des geometrischen Merkmals der Bearbeitungsmarkierungen erfolgt.

Dadurch, dass in erfindungsgemäßer Weise mindestens ein geometrisches Merkmal der Bearbeitungsmarkierungen für die optische Messung oder deren Auswertung berücksichtigt wird, die optische Messung und/oder deren Auswertung demnach unter Berücksichtigung der Bearbeitungsmarkierungen angepasst ist, können Verzahnungen, die Bearbeitungsmarkierungen aufweisen, optisch zuverlässig gemessen werden.

Das erfindungsgemäße Verfahren ermöglicht insbesondere eine schnellere Messung von Bearbeitungsmarkierungen aufweisenden Verzahnungen, da die optische Messung im Vergleich zur taktilen Messung zügigere Relativbewegungen während der Durchführung der Messung gestattet und zudem pro Zeiteinheit, d.h. z.B. pro Sekunde oder pro Minute, eine wesentlich größere Anzahl von Messpunkten erfasst werden können.

Insbesondere kann vorgesehen sein, dass die Bestimmung mindestens eines geometrischen Merkmals der Bearbeitungsmarkierungen, die Bestimmung mehrerer geometrischer Merkmale der Bearbeitungsmarkierungen umfasst, und zwar die Bestimmung der flankenspezifischen Positionen der Berge und Täler und dem Versatz.

Weiter kann vorgesehen sein, der Verlauf des Messwegs für die optische Messung und/oder die Positionen von Messpunkten für die optische Messung unter Berücksichtigung der geometrischen Merkmale der Bearbeitungsmarkierungen definiert werden, und zwar unter Berücksichtigung der flankenspezifischen Positionen der Berge und Täler und dem Versatz.

Alternativ oder ergänzend kann vorgesehen sein, dass die Auswertung von Messwerten der optischen Messung unter Berücksichtigung der geometrischen Merkmale der Bearbeitungsmarkierungen erfolgt, und zwar unter Berücksichtigung der der flankenspezifischen Positionen der Berge und Täler und dem Versatz.

Wenn im vorliegenden Text von dem "Berg" und dem "Tal" einer Bearbeitungsmarkierung gesprochen wird, bzw. von den "Bergen" und den "Tälern" der Bearbeitungsmarkierungen gesprochen wird, so handelt es sich dabei um die jeweilige minimale Erstreckung, d.h. dem Tal, und die jeweilige maximale Erstreckung, d.h. dem Berg, einer jeweiligen Bearbeitungsmarkierung, gemessen normal zur zu erzeugenden Sollgeometrie der Zahnflanke. Die Sollgeometrie beschreibt dabei die herzustellende Geometrie der Zahnflanken der Verzahnung, die im Rahmen einer Verzahnungsauslegung theoretisch vorgegeben worden ist und mittels praktischer Verzahnverfahren möglichst exakt erzeugt werden soll. Vorliegend wird die im kontinuierlichen spanabhebenden Verzahnverfahren unter Verwendung des Werkzeugs mit geometrisch bestimmter Schneide zu erzeugende Sollgeometrie als Referenz zur Bestimmung der Berge und Täler zugrunde gelegt.

Es kann vorgesehen sein, dass der Versatz der flankenspezifischen Position der Berge und Täler benachbarter Zahnflanken über den gesamten Umfang der Verzahnung betrachtet eine spiralförmige Anordnung der Bearbeitungsmarkierungen ergibt, dass die Bestimmung des mindestens einen geometrischen Merkmals der Bearbeitungsmarkierungen die Bestimmung einer Steigung und einer Orientierung der spiralförmigen Anordnung der Bearbeitungsmarkierungen aufweist, dass die Durchführung der optischen Messung die Vorgabe des Messwegs aufweist, wobei der Messweg zumindest abschnittsweise als sich um die Verzahnung windende Messspirale definiert wird, wobei die Messspirale eine Orientierung und eine Steigung aufweist und dass die Steigung und Orientierung der Messspirale zumindest abschnittweise identisch zur Steigung und Orientierung der spiralförmigen Anordnung der Bearbeitungsmarkierungen definiert wird und/oder zumindest abschnittweise abweichend von der Steigung und/oder Orientierung der spiralförmigen Anordnung der Bearbeitungsmarkierungen definiert wird.

Soweit die Steigung und Orientierung der Messspirale abschnittweise identisch zur Steigung und Orientierung der spiralförmigen Anordnung der Bearbeitungsmarkierungen definiert wird, so kann in diesem Bereich sichergestellt werden, dass die erfassten Messwerte gezielt an definierten Höhenpositionen der Bearbeitungsmarkierungen aufgenommen werden, um durch die Bearbeitungsmarkierungen hervorgerufene Messfehler bereits während der Messung zu vermeiden. Insbesondere kann vorgesehen, sein, dass zumindest eine Teilmenge der zu erfassenden Messpunkte entlang der Messspirale in äquidistanten Abständen zueinander angeordnet sind, insbesondere in äquidistanten Winkelabständen zueinander angeordnet sind.

Soweit die Steigung und Orientierung der Messspirale abschnittweise nicht identisch zur Steigung und Orientierung der spiralförmigen Anordnung der Bearbeitungsmarkierungen definiert wird, so kann in diesem Bereich sichergestellt werden, dass die erfassten Messwerte gezielt an definierten Höhenpositionen der Bearbeitungsmarkierungen aufgenommen werden, um durch die Bearbeitungsmarkierungen hervorgerufene Messfehler bereits während der Messung zu vermeiden. Insbesondere kann vorgesehen, sein, dass zumindest eine Teilmenge der zu erfassenden Messpunkte entlang der Messspirale in äquidistanten Abständen zueinander angeordnet sind, insbesondere in äquidistanten Winkelabständen zueinander angeordnet sind. D.h. soweit die spiralförmige Anordnung der Bearbeitungsmarkierungen bekannt ist, kann auch durch eine von der spiralförmigen Anordnung abweichend definierte Messspirale angegeben werden, entlang der Messwerte aufgenommen werden können, die immer an definierten Höhenpositionen der Bearbeitungsmarkierungen erfasst werden, um durch die Bearbeitungsmarkierungen hervorgerufene Messfehler bereits während der Messung zu vermeiden. Insbesondere kann vorgesehen, sein, dass zumindest eine Teilmenge der zu erfassenden Messpunkte entlang der Messspirale in äquidistanten Abständen zueinander angeordnet sind, insbesondere in äquidistanten Winkelabständen zueinander angeordnet sind.

Die Bestimmung der Steigung und Orientierung der spiralförmigen Anordnung der Bearbeitungsmarkierungen kann rechnerisch anhand einer Auswertung von Fertigungsparametern des spanabhebenden Verzahnverfahrens erfolgen. So kann beispielsweise für ein Wälzfräsverfahren oder ein Wälzschälverfahren anhand der Werkzeuggeometrie, der Verzahnung und der eingestellten Relativbewegung, wie der eingestellten Vorschübe und dergleichen, die Position der Schnitte, d.h. der Bearbeitungsmarkierungen, flankenspezifisch berechnet werden.

Alternativ oder ergänzend kann vorgesehen sein, dass die Bestimmung der Steigung und Orientierung der spiralförmigen Anordnung der Bearbeitungsmarkierungen messtechnisch anhand einer Auswertung von Messdaten erfolgt. Die Messdaten zur Bestimmung der Steigung und Orientierung der spiralförmigen Anordnung können vor oder während der optischen Messung erfasst werden. D.h. es kann zunächst eine separate Messung durchgeführt werden, und zwar optisch und/oder taktil, um die Steigung und Orientierung der spiralförmigen Anordnung der Bearbeitungsmarkierungen messtechnisch zu erfassen, bevor die optische Messung der Verzahnung des Bauteils durchgeführt wird. Alternativ kann vorgesehen sein, dass die Bestimmung der Steigung und Orientierung der spiralförmigen Anordnung der Bearbeitungsmarkierungen während der optischen Messung der Verzahnung des Bauteils erfolgt, wobei die Steigung und Orientierung der spiralförmigen Anordnung der Bearbeitungsmarkierungen bei der Auswertung der Messwerte der optischen Messung berücksichtigt wird.

Alternativ oder ergänzend kann vorgesehen sein, dass die Bestimmung der Steigung und Orientierung der spiralförmigen Anordnung der Bearbeitungsmarkierungen rechnerisch anhand einer Auswertung von Fertigungsparametern eines spanabhebenden Verzahnverfahrens vergleichbarer Bauteile erfolgt. So kann anhand von Fertigungsverfahren mit vergleichbaren Prozessparametern abgeschätzt werden, welche Steigung und Orientierung die spiralförmige Anordnung der Bearbeitungsmarkierungen der Verzahnung voraussichtlich aufweisen wird, um eine erste optische Messung der Verzahnung des Bauteils durchzuführen.

Es kann vorgesehen sein, dass die Steigung der Messspirale zumindest abschnittsweise mehr als dem Doppelten der Steigung der spiralförmigen Anordnung der Bearbeitungsmarkierungen entspricht oder dass die Steigung der Messspirale zumindest abschnittsweise weniger als der Hälfte der Steigung der spiralförmigen Anordnung der Bearbeitungsmarkierungen entspricht. Die Messspirale kann daher gezielt stark abweichend von der Steigung der spiralförmigen Anordnung der Bearbeitungsmarkierungen gewählt werden.

Gemäß einer Ausgestaltung des Verfahrens kann vorgesehen sein, dass die Messspirale bezogen auf eine Rotationsachse der Verzahnung einen Winkelbereich von 1080° oder weniger abdeckt, insbesondere, dass die Messspirale bezogen auf eine Rotationsachse der Verzahnung einen Winkelbereich von 720° oder weniger abdeckt. So kann eine zügige optische Messung der Verzahnung erreicht werden.

Alternativ oder ergänzend kann vorgesehen sein, dass die Messspirale bezogen auf eine Zahnbreite der Verzahnung 50% oder mehr der Zahnbreite der Verzahnung abdeckt, insbesondere 75% oder mehr der Zahnbreite der Verzahnung abdeckt.

Soweit die voranstehenden Aspekte kombiniert werden, kann beispielsweise vorgesehen sein, dass die Messspirale bezogen auf eine Rotationsachse der Verzahnung einen Winkelbereich von 720° oder weniger abdeckt und 75% oder mehr der Zahnbreite der Verzahnung abdeckt, um eine schnelle optische Messung von im Wesentlichen der gesamten Verzahnung zu erreichen, bzw. zügig Messwerte entlang des Großteils der Zahnbreite entlang des gesamten Umfangs der Verzahnung zu erfassen.

Nach einer Ausgestaltung des Verfahrens kann vorgesehen sein, dass die Berge und Täler eine Höhendifferenz zueinander aufweisen, wobei die Höhendifferenz in einer Richtung normal zu einer beim spanabhebenden Verzahnverfahren zu erzeugenden Soll-geometrie der Zahnflanke gemessen wird, dass die Auswertung von Messpunkten von Zahnflanke zu Zahnflanke entlang der Höhendifferenz der Bearbeitungsmarkierungen betrachtet für jede der Bearbeitungsmarkierungen auf dergleichen Höhenposition einer jeweiligen Bearbeitungsmarkierung der jeweiligen Zahnflanke erfolgt. Auf diese Weise kann der Einfluss der Bearbeitungsmarkierungen auf das Messergebnis während der Auswertung der Messpunkte eliminiert bzw. zumindest stark reduziert werden.

Alternativ oder ergänzend kann vorgesehen sein, dass die Erfassung von Messpunkten von Zahnflanke zu Zahnflanke entlang der Höhendifferenz der Bearbeitungsmarkierungen betrachtet für jede der Bearbeitungsmarkierungen auf dergleichen Höhenposition einer jeweiligen Bearbeitungsmarkierung der jeweiligen Zahnflanke erfolgt. Auf diese Weise kann der Einfluss der Bearbeitungsmarkierungen auf das Messergebnis bereits während der Erfassung der Messpunkte eliminiert bzw. zumindest stark reduziert werden.

Es kann vorgesehen sein, dass die Bestimmung des mindestens einen geometrischen Merkmals der Bearbeitungsmarkierungen die Bestimmung der Höhendifferenz der Berge und Täler aufweist.

Es kann vorgesehen sein, dass die Bestimmung des mindestens einen geometrischen Merkmals der Bearbeitungsmarkierungen rechnerisch anhand einer Auswertung von Fertigungsparametern des spanabhebenden Verzahnverfahrens erfolgt. So kann beispielsweise für ein Wälzfräsverfahren oder ein Wälzschälverfahren anhand der Werkzeuggeometrie, der Verzahnung und der eingestellten Relativbewegung, wie der eingestellten Vorschübe und dergleichen, die Position der Schnitte, d.h. der Bearbeitungsmarkierungen, flankenspezifisch berechnet werden. Weiter können die Dimensionen der Bearbeitungsmarkierungen, d.h. deren Höhendifferenz, Breite und Länge berechnet werden.

Die Berechnung der Höhendifferenz der Berge und Täler ist beispielsweise in Klocke, Fritz; Brecher, Christian: "Zahnrad- und Getriebetechnik", 1. Auflage, Hanser Verlag, 2016, ISBN 978-3-446-43068-6, auf den Seiten 193, 194 beschrieben. Die Höhendifferenz wird in diesem Fachbuch als Vorschubmarkierungstiefe bezeichnet.

Alternativ oder ergänzend kann vorgesehen sein, dass die Bestimmung des mindestens einen geometrischen Merkmals der Bearbeitungsmarkierungen messtechnisch anhand einer Auswertung von Messdaten erfolgt. Die Messdaten zur Bestimmung des mindestens einen geometrischen Merkmals der Bearbeitungsmarkierungen können vor oder während der optischen Messung erfasst werden. D.h. es kann zunächst eine separate Messung durchgeführt werden, und zwar optisch und/oder taktil, um das mindestens eine geometrische Merkmal der Bearbeitungsmarkierungen messtechnisch zu erfassen, bevor die optische Messung der Verzahnung des Bauteils durchgeführt wird. Alternativ kann vorgesehen sein, dass die Bestimmung des mindestens einen geometrischen Merkmals der Bearbeitungsmarkierungen während der optischen Messung der Verzahnung des Bauteils erfolgt, wobei das mindestens eine geometrische Merkmal der Bearbeitungsmarkierungen bei der Auswertung der Messwerte der optischen Messung berücksichtigt wird. Insbesondere können die Position der Schnitte, d.h. der Bearbeitungsmarkierungen, flankenspezifisch gemessen werden. Weiter können die Dimensionen der Bearbeitungsmarkierungen, d.h. deren Höhendifferenz, Breite und Länge berechnet werden.

Alternativ oder ergänzend kann vorgesehen sein, dass die Bestimmung des mindestens einen geometrischen Merkmals der Bearbeitungsmarkierungen rechnerisch anhand einer Auswertung von Fertigungsparametern eines spanabhebenden Verzahnverfahrens vergleichbarer Bauteile erfolgt.

Es kann vorgesehen sein, dass zur optischen Messung ein optischer Abstandssensor zur optischen Distanzmessung verwendet wird, wobei der optische Abstandssensor ein Punktsensor ist, wie ein konfokal chromatischer Abstandssensor oder dergleichen.

Gemäß einer Ausgestaltung des Verfahrens kann vorgesehen sein, dass mittels der optischen Messung Profillinien der Zahnflanken erfasst werden und anhand der Profillinien z.B. eine Teilung der Verzahnung bestimmt wird. Gemäß einer Ausgestaltung des Verfahrens kann vorgesehen sein, dass mittels der optischen Messung Flankenlinien der Zahnflanken erfasst werden. Gemäß einer Ausgestaltung des Verfahrens kann vorgesehen sein, dass mittels der optischen Messung Messgitter und/oder Einzelmesspunkte an den jeweiligen Zahnflanken erfasst werden. Es versteht sich, dass alternativ oder ergänzend zur Bestimmung der Teilung eine oder mehrere der folgenden Verzahnungsabweichungen bestimmt werden: Teilungsabweichungen, wie die Teilungseinzelabweichung, die Teilungssummenabweichung, den Teilungssprung oder dergleichen, Zahndickenabweichungen, Rundlaufabweichungen, Rundheitsabweichungen; Planlaufabweichungen; Ebenheitsabweichungen; Verwindung / Verschränkung.

Gemäß einer Ausgestaltung des Verfahrens kann vorgesehen sein, dass mittels der optischen Messung eine oder mehrere der nachfolgend aufgelisteten erfasst werden: Profilabweichungen, wie die Profil-Gesamtabweichung, die Profil-Formabweichung, die Profil-Winkelabweichung, die Eingriffswinkelabweichung oder dergleichen, und/oder die Abweichungen einer oder mehrerer Zahnflankenmodifikationen in Profilrichtung, wie Abweichungen der Höhenballigkeit, der Kopf- und/oder Fußrücknahme, der Profilwinkelmodifikation, der Profilverschränkung oder dergleichen, Flankenlinienabweichungen, wie die Flankenlinien-Gesamtabweichung, die Flankenlinien-Formabweichung, die Flankenlinien-Winkelabweichung, die Spiralwinkelabweichung oder dergleichen und/oder die Abweichungen einer oder mehrerer Zahnflankenmodifikationen in Flankenrichtung, wie Abweichungen der Breitenballigkeit, der Endenrücknahmen, der Flankenlinien-Winkelmodifikation, der Flankenlinienverschränkung oder dergleichen.

Es kann vorgesehen sein, dass das spanabhebende Verzahnverfahren eine Weichbearbeitung ist und/oder dass das optische Messen der Verzahnung des Bauteils vor einem Härten und/oder vor einer Hartfeinbearbeitung der Verzahnung erfolgt und/oder dass die Verzahnung eine Schrägverzahnung ist.

Nachfolgend wir die Erfindung anhand von Ausführungsbeispiele darstellenden Zeichnungen näher beschrieben. Es zeigen jeweils schematisch:
- Fig. 1: ein Zahnrad mit einem Wälzfräser in einer Draufsicht;
- Fig. 2: das Zahnrad aus Fig. 1 in einer perspektivischen Ansicht von oben;
- Fig. 3A: Vorschubmarkierungen;
- Fig. 3B: Hüllschnittabweichungen;
- Fig. 3C: Vorschubmarkierungen und Hüllschnittabweichungen;
- Fig. 3D: die Entstehung von Vorschubmarkierungen;
- Fig. 3E: die Entstehung von Hüllschnittabweichungen;
- Fig. 4: eine Zahnteilung des Zahnrads aus Fig. 1;
- Fig. 5: eine vergrößerte Darstellung der Vorschubmarkierungen und Hüllschnittabweichungen;
- Fig. 6: einen Schnitt VI - VI gemäß Fig. 5;
- Fig. 7: eine Steigung der Vorschubmarkierungen;
- Fig. 8: ein optisches Messen des Zahnrads aus Fig. 1;
- Fig. 9: einen Vergleich eines Messwegs und der Steigung der Vorschubmarkierungen;
- Fig. 10: eine Koordinatenmessmaschine zur Verzahnungsmessung;
- Fig. 11: einen Ablaufplan eines erfindungsgemäßen Verfahrens.

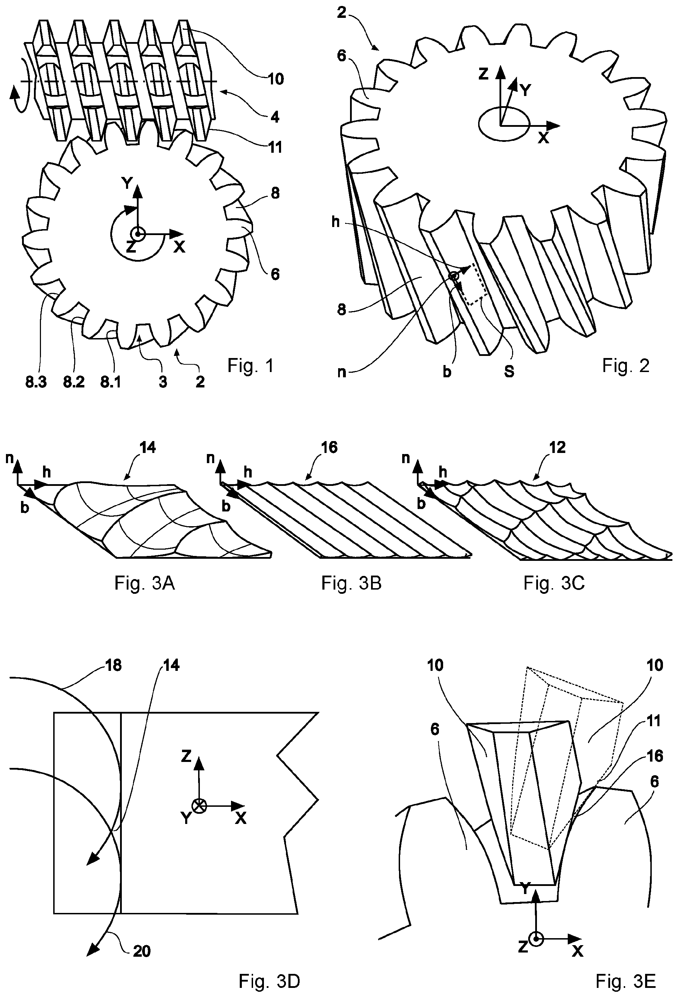

Fig. 1 zeigt Bauteil 2 mit einer Verzahnung 3. Das Bauteil 2 ist ein schrägverzahntes Stirnrad. Zudem zeigt Fig. 1 einen Wälzfräser 4. Der Wälzfräser 4 dient zur spanabhebenden Bearbeitung bzw. Herstellung von Zähnen 6 der Verzahnung 3 des Stirnrads 2 mit geometrisch bestimmter Schneide. Zur besseren Nachvollziehbarkeit der nachstehenden Ausführungen wird ein kartesisches Koordinatensystem X, Y, Z eingeführt.

Während der Zerspanung führen das Stirnrad 2 und der Wälzfräser 4 eine gekoppelte Relativbewegung aus, wobei das Stirnrad 2 und der Wälzfräser 4 jeweils um ihre eigene Achse rotieren und zudem ein Vorschub des Wälzfräsers 4 in Z-Richtung erfolgt, um Zahnflanken 8 der Zähne 6 des Stirnrads 2 entlang ihrer gesamten Zahnbreite zu bearbeiten. Das schrägverzahnte Stirnrad 2 wird nachfolgend synonym auch als Zahnrad 2 bezeichnet.

Fig. 2 zeigt das schrägverzahnte Stirnrad 2 in einer perspektivischen Ansicht von oben. Es wird exemplarisch ein lokales Koordinatensystem b, h, n eingeführt, wobei die Koordinate b eine Breitenrichtung einer Zahnflanke 8 repräsentiert, die Koordinate h eine Höhenrichtung einer Zahnflanke 8 repräsentiert und eine Koordinate n eine Normalenrichtung relativ zur zu fertigenden Sollgeometrie der Zahnflanke 8 repräsentiert.

Wie in Fig.1 zu erkennen, weist der Wälzfräser 4 eine endliche Anzahl von Schneidzähnen 10 auf, welche die evolventische Form der Zähne 6 des Stirnrads 2 durch eine endliche Anzahl von Einzelschnitten lediglich annähern können. Durch das Wälzfräsen entstehen auf den Zahnflanken 8 daher die in Fig. 3C gezeigten Bearbeitungsmarkierungen 12. Die Fig. 3C stellt schematisch eine vergrößerte Ansicht der Einzelheit S einer Zahnflanke 8 nach dem Bearbeiten durch Wälzfräsen dar.

Die Bearbeitungsmarkierungen 12 gemäß Fig. 3C sind das Ergebnis einer Überlagerung der in Fig. 3A exemplarisch einzeln dargestellten Vorschubmarkierungen 14 und der in Fig. 3B exemplarisch einzeln dargestellten Hüllschnittabweichungen 16. Die Bearbeitungsmarkierungen 12 bestehen daher aus Vorschubmarkierungen 14 und Hüllschnittabweichungen 16.

Es versteht sich, dass die Vorschubmarkierungen 14 und die Hüllschnittabweichungen 16 in der in Fig. 3A und Fig. 3B dargestellten, separaten Form für sich genommen nicht einzeln auftreten, sondern beim Wälzfräsen immer zusammen in der in Fig. 3C dargestellten Form entstehen. Die Fig. 3A und die Fig. 3B dienen lediglich dazu, die Relativkinematik und die dadurch erzeugten Abweichungen in zwei Komponenten zu zerlegen und zu veranschaulichen.

Die in Fig. 3A exemplarisch dargestellten Vorschubmarkierungen 14 ergeben sich durch den Vorschub des Wälzfräsers 4 in Z-Richtung während der gekoppelten Relativbewegung. Fig. 3D zeigt hierzu exemplarisch die Fräserbahnen 18, 20 aufeinanderfolgender, nach einer Werkstückumdrehung auftretender Schnitte und eine sich daraus ergebende Vorschubmarkierung 14.

Fig. 3E zeigt exemplarisch die Entstehung von Hüllschnittabweichungen 16, die sich aus der gekoppelten Wälzbewegung zwischen dem Zahnrad 2 und dem Wälzfräser 4 mit seiner endlichen Anzahl von Schneidzähne10 ergibt, wobei wiederum eine einzelne, sich aufgrund aufeinanderfolgender Schnitte der Schneidzähne 10 des Wälzfräsers 4 ergebende Hüllschnittabweichung16 gezeigt ist.

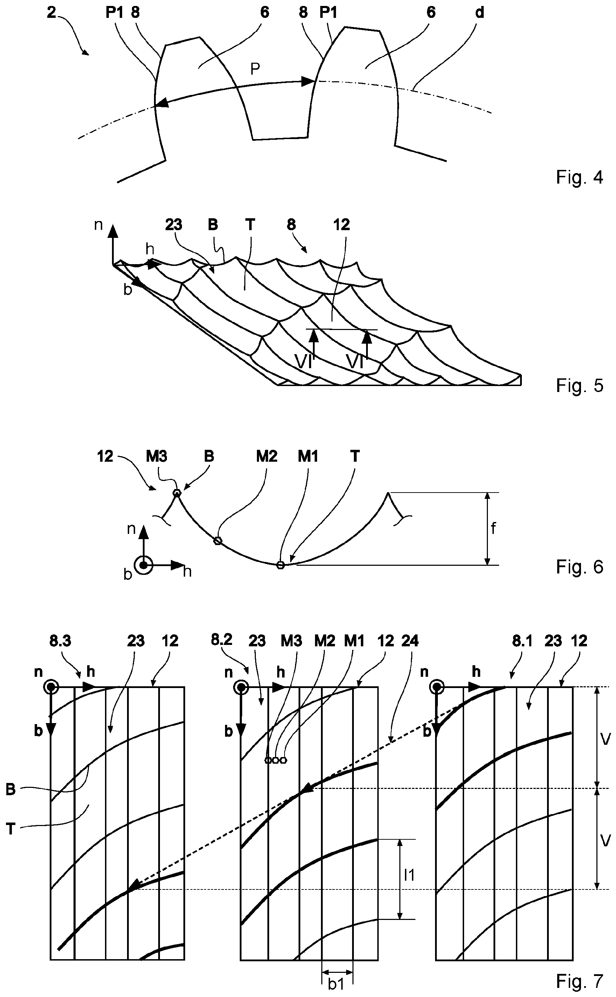

Aufgrund der Bearbeitungsmarkierungen 12 kann eine Messung der Geometrie des durch Wälzfräsen bearbeiteten Zahnrads 2 verfälscht werden. Fig. 4 zeigt exemplarisch eine Zahnteilung P des Zahnrads 2 am Teilkreis d, wobei die Messung der Zahnteilung P ein Beispiel für eine sehr häufig auftretende Messaufgabe in der Verzahntechnik ist.

Je nachdem, ob ein Messpunkt an einer betreffenden Zahnflanke 8 in einem Tal T einer Bearbeitungsmarkierung 12 oder auf einem Berg B einer Bearbeitungsmarkierung 12 erfasst worden ist, ergeben sich daher unterschiedliche Messwerte für die Zahnteilung P (vgl. Fig. 6). Fig. 6 veranschaulicht dabei exemplarisch einen Schnitt durch eine Bearbeitungsmarkierung 12 gemäß Fig. 5.

Fig. 6 zeigt hierzu weiter exemplarisch einen Messpunkt M1 in dem Tal T der Bearbeitungsmarkierung 12, einen Messpunkt M2 zwischen dem Berg B und dem Tal T der Bearbeitungsmarkierung 12 und einen Messpunkt M3 auf dem Berg B der Bearbeitungsmarkierung 12. Die Höhendifferenz f der Bearbeitungsmarkierung 12 und der sich daraus maximal ergebende Fehler ist mit Bezugszeichen f gekennzeichnet. Es ist daher ersichtlich, dass die Messung der Teilung P in Abhängigkeit von der Höhenposition der Messwertaufnahme an einer Bearbeitungsmarkierung 12 um einen Betrag zwischen 0 bis f verfälscht werden kann. Die Messpunkte M1, M2, M3 sind zudem beispielhaft in die später beschriebene noch im Detail beschriebene Fig. 7 eingezeichnet worden. In Abhängigkeit von der Höhenposition des betreffenden Messpunkts ändert sich auch der Messwinkel bzw. Antastwinkel, d.h. derjenige Winkel, den die Oberfläche der Zahnflanke mit der optischen Achse der optischen Messvorrichtung einschließt. Die Entscheidung, ob eine Messung für die jeweiligen Bearbeitungsmarkierung an einem Messpunkt M1, M2 oder M3 erfolgt, kann daher auch in Abhängigkeit davon getroffen werden, für welchen dieser Messpunkte M1, M2, M3 ein Antastwinkel vorliegt, der die optische Messung, d.h. die Qualität der Abbildung des betreffenden Messpunkts, begünstigt.

Es wird insbesondere vorgeschlagen, Messwerte im Zuge einer optischen Messung der Verzahnung 3 für jede der zu messenden Zahnflanken beispielsweise immer in einem Tal T einer jeweiligen Bearbeitungsmarkierung 12 oder auf einem Berg B einer jeweiligen Bearbeitungsmarkierung 12 oder einer definierten Zwischenposition zwischen einem Berg B und einem Tal T einer jeweiligen Bearbeitungsmarkierung 12 aufzunehmen und/oder auszuwerten, um der Verfälschung von Messergebnisse aufgrund der Bearbeitungsmarkierungen 12 entgegenzuwirken.

Hierbei kann insbesondere berücksichtigt werden, dass die Berge B und Täler T benachbarter Zahnflanken 8 bezüglich ihrer flankenspezifischen Position in Zahnbreitenrichtung relativ zueinander einen Versatz aufweisen, was exemplarisch in Figur 7 dargestellt ist.

Fig. 7 ist eine stark vereinfachte Darstellung der Bearbeitungsmarkierungen 12 in einer Draufsicht entlang der jeweiligen Normalenrichtung n auf jeweilige benachbarte Zahnflanken 8.1, 8.2, 8.3 (vgl. Fig. 1).

Gemäß Fig. 7 ist ersichtlich, dass sich die Berge B und Täler T der Vorschubmarkierungen 12 von Zahnflanke 8.1 zu Zahnflanke 8.2 zu Zahnflanke 8.3 in Zahnbreitenrichtung b verschieben, d.h. einen Versatz V in Zahnbreitenrichtung b aufweisen. Der Versatz der flankenspezifischen Position der Berge B und Täler T benachbarter Zahnflanken 8.1, 8.2, 8.3 ergibt über den gesamten Umfang der Verzahnung 3 betrachtet eine spiralförmige Anordnung 24 der Bearbeitungsmarkierungen 12, die eine Steigung und eine Orientierung aufweist, wie durch die gestrichelten Pfeile in Fig. 7 angedeutet. Die gewählten Darstellungen sind schematisiert, um die in der Praxis mit blo-ßem Auge nur schwer zu erkennenden Effekte zu veranschaulichen.

Erfindungsgemäß kann vorgesehen sein, eine optische Messung an diese spiralförmige Anordnung 24 der Bearbeitungsmarkierungen 12 anzupassen, um beispielsweise einen Messweg gezielt an die spiralförmige Anordnung 24 anzugleichen oder aber einen Messweg gezielt abweichend von dieser spiralförmigen Anordnung 24 der Bearbeitungsmarkierungen 12 vorzugeben.

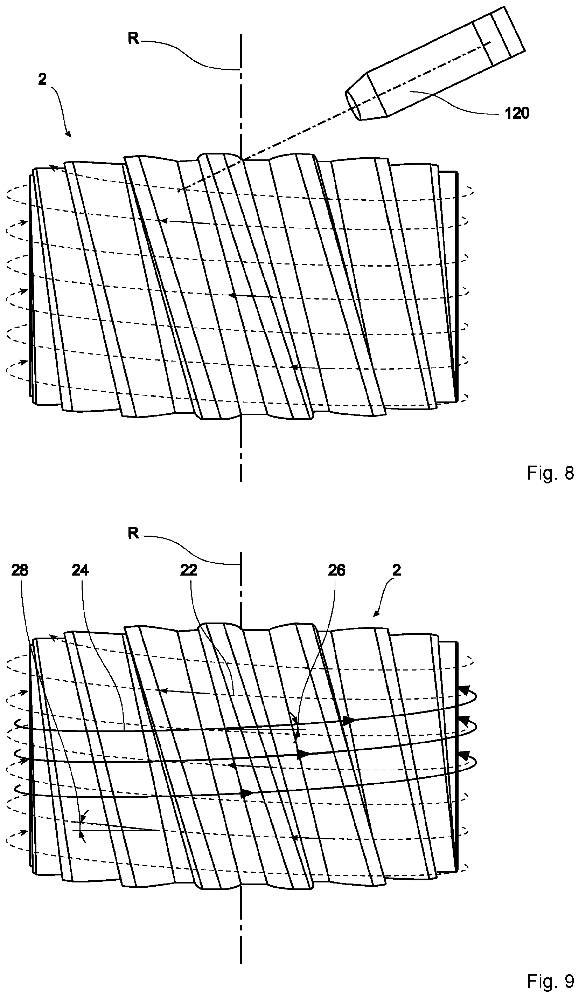

Fig. 8 zeigt hierzu exemplarisch einen sich spiralförmig um das Zahnrad 2 windenden Messweg 22, wobei in Fig. 9 exemplarisch diesem spiralförmigen Messweg 22 die spiralförmige Anordnung 24 der Bearbeitungsmarkierungen schematisch überlagert ist. Der spiralförmige Messweg 22 ist in diesem Fall gezielt abweichend von der Steigung und Orientierung der spiralförmigen Anordnung 24 der Bearbeitungsmarkierungen 12 gewählt worden. Ziel hierbei ist es, entweder bereits während der Messung ausschließlich Messwerte an den jeweiligen Höhenpositionen M1 der Bearbeitungsmarkierungen 12 oder ausschließlich Messwerte an den jeweiligen Höhenpositionen M2 der Bearbeitungsmarkierungen 12 oder ausschließlich Messwerte an den jeweiligen Höhenpositionen M3 der Bearbeitungsmarkierungen 12 zu erfassen oder nur Messwerte dieser Höhenpositionen auszuwerten, um die Verfälschung der Messergebnisse der optischen Messung durch die Bearbeitungsmarkierungen 12 zu eliminieren oder zumindest zu reduzieren.

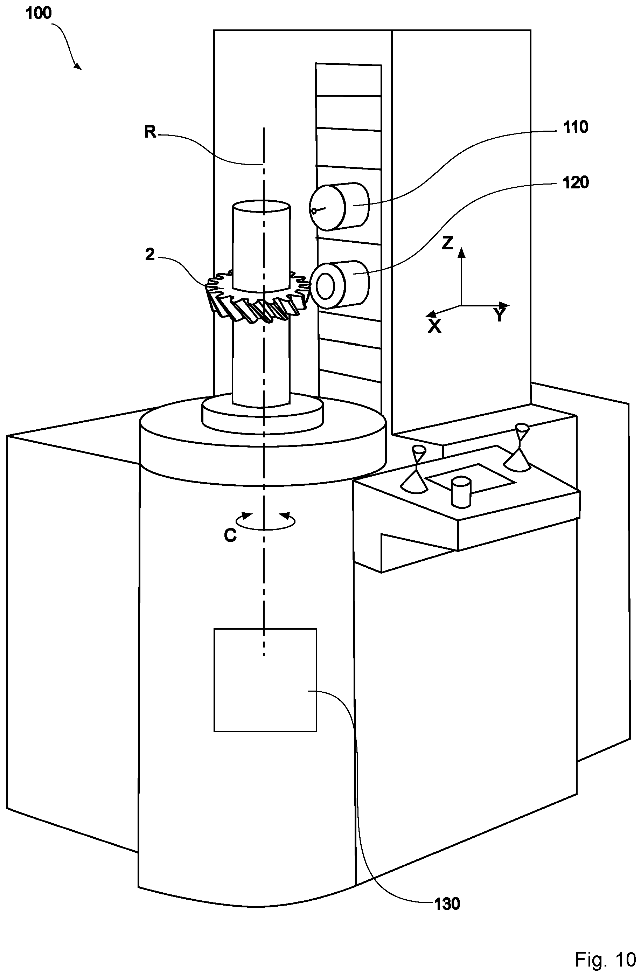

Fig. 10 zeigt eine Koordinatenmessmaschine 100 zur Verzahnungsmessung, die zur Ausführung des nachfolgend im Detail beschriebenen erfindungsgemäßen Verfahrens eingerichtet ist. Die Koordinatenmessmaschine 100 hat eine taktile Messvorrichtung 110 zur taktilen Verzahnungsmessung und eine optische Messvorrichtung 120 zur optischen Verzahnungsmessung.

Die Koordinatenmessmaschine 100 hat eine Drehachse C zur Rotation des zu messenden Zahnrads 2 um seine eigene Achse. Die Koordinatenmessmaschine 100 hat drei Linearachsen X, Y, Z, die entsprechend des jeweiligen Freiheitsgrades mit X, Y, Z bezeichnet werden. Die optische Messvorrichtung 120 und die taktile Messvorrichtung 110 können daher relativ zu dem Zahnrad translatorisch in drei orthogonalen Raumrichtungen verschoben werden, die ebenfalls mit X, Y, Z bezeichnet werden. Die Koordinatenmessmaschine 100 hat eine Steuerung 130, die zur Ausführung des erfindungsgemäßen Verfahrens eingerichtet ist.

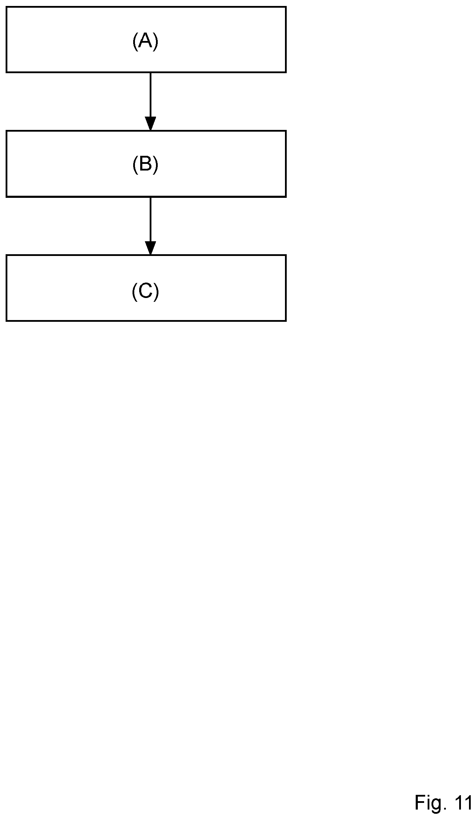

Figur 11 zeigt exemplarisch Verfahrensschritte des nachfolgend beschriebenen erfindungsgemäßen Verfahrens.

Gemäß einem ersten Verfahrensschritt (A) erfolgt zunächst ein Bereitstellen des Bauteils 2, wobei das Bauteil 2 die Verzahnung 3 mit den Zähnen 6 aufweist und wobei die Zahnflanken 8 der Verzahnung 6 die Bearbeitungsmarkierungen 12 aufweisen.

Die Bearbeitungsmarkierungen 12 sind durch die Herstellung der Zahnflanken 8 mittels Wälzfräsen erzeugt worden (Fig. 1).

Die Bearbeitungsmarkierungen 12 bilden an jeder der Zahnflanken 8 ein jeweiliges topografisches Oberflächenprofil 23 mit Bergen B und Tälern T mit einer Höhendifferenz f in Normalenrichtung n zur Soll-Geometrie der Zahnflanke 8 aus, das jeweils durch den periodischen Eingriff der Schneiden 11 der Zähne 10 des Wälzfräsers 4 während des kontinuierlichen spanabhebenden Verzahnverfahrens an den jeweiligen Zahnflanken 8 erzeugt worden ist,

Die Position von Bergen B und Tälern T der Bearbeitungsmarkierungen in Zahnbreitenrichtung b ist flankenspezifisch (Fig. 7).

Die Berge B und Täler T benachbarter Zahnflanken 8 weisen bezüglich ihrer flankenspezifischen Position in Zahnbreitenrichtung b relativ zueinander den Versatz V auf. Der Versatz V ist infolge des axialen Vorschubs des Werkzeugs 4 in Zahnbreitenrichtung b während des Wälzfräsens erzeugt worden.

Gemäß einem zweiten Verfahrensschritt (B) erfolgt eine Bestimmung mehrerer geometrischer Merkmale der Bearbeitungsmarkierungen 12, und zwar der Höhendifferenz f, der flankenspezifischen Positionen der Berge B und Täler T und dem Versatz - wobei sich die flankenspezifischen Positionen der Berge B und Täler T aus dem Versatz bestimmen lassen, und umgekehrt.

Gemäß einem dritten Verfahrensschritt (C) erfolgt eine Durchführung einer optischen Messung der Verzahnung 3 des Bauteils 2, wobei ein Verlauf des Messwegs 22 für die optische Messung und/oder wobei Positionen von Messpunkten für die optische Messung unter Berücksichtigung der geometrischen Merkmale der Bearbeitungsmarkierungen 12 definiert werden und/oder wobei eine Auswertung von Messwerten der optischen Messung unter Berücksichtigung der geometrischen Merkmale der Bearbeitungsmarkierungen erfolgt.

Vorliegend ergibt der Versatz V der flankenspezifischen Position der Berge B und Täler T benachbarter Zahnflanken 8, 8.1, 8.2, 8.3 über den gesamten Umfang der Verzahnung 3 betrachtet eine spiralförmige Anordnung 24 der Bearbeitungsmarkierungen 12.

Die Bestimmung der geometrischen Merkmale der Bearbeitungsmarkierungen 12 weist die Bestimmung der Steigung 26 und der Orientierung der spiralförmigen Anordnung 24 der Bearbeitungsmarkierungen 12 auf.

Die Durchführung der optischen Messung weist die Vorgabe des Messwegs 22 auf, wobei der Messweg 22 zumindest abschnittsweise als Messspirale 22 definiert wird und wobei die Messspirale 22 eine Orientierung und eine Steigung 28 aufweist.

Vorliegend ist die Messspirale 22 linkssteigend orientiert und die spiralförmige Anordnung 24 ist rechtssteigend orientiert. Die Steigung 28 der Messspirale 24 ist größer als die Steigung 26 der spiralförmigen Anordnung 24. Die Steigung und Orientierung der Messspirale 22 ist daher abweichend von der Steigung und Orientierung der spiralförmige Anordnung 24 orientiert.

Gemäß einer alternativen Variante des Verfahrens ist vorgesehen, dass die Steigung und Orientierung der Messspirale der Steigung und Orientierung der spiralförmigen Anordnung der Bearbeitungsmarkierungen entsprechen. In diesem Fall sind die Messpirale 22 und die spiralförmige Anordnung deckungsgleich.

Die Bestimmung der Steigung und Orientierung der spiralförmigen Anordnung der Bearbeitungsmarkierungen kann rechnerisch anhand einer Auswertung von Fertigungsparametern des Wälzfräsverfahrens erfolgen und/oder kann messtechnisch anhand einer Auswertung von Messdaten erfolgen und/oder kann rechnerisch anhand einer Auswertung von Fertigungsparametern eines spanabhebenden Verzahnverfahrens vergleichbarer Bauteile erfolgen.

Die Messspirale 22 deckt bezogen auf eine Rotationsachse R der Verzahnung 6 einen Winkelbereich von 1080° oder weniger ab.

Die Messspirale 22 deckt bezogen auf eine Zahnbreite mehr als 75% der Zahnbreite der Verzahnung 6 ab.

Es ist vorgesehen, dass eine Auswertung von Messpunkten von Zahnflanke 8 zu Zahnflanke 8 entlang der Höhendifferenz f der Vorschubmarkierungen betrachtet für jede der Bearbeitungsmarkierungen 12 auf dergleichen Höhenposition einer jeweiligen Bearbeitungsmarkierung 12 der jeweiligen Zahnflanke 8 erfolgt - und zwar entweder gemäß der Höhenposition M1 oder M2 oder M3, wie exemplarisch in Fig. 6 und Fig. 7 gezeigt. D.h. es wird immer im Tal T gemessen oder ausgewertet oder es wird immer auf dem Berg B gemessen oder ausgewertet oder es wird immer an einer definierten Zwischenposition zwischen Berg B und Tal T ausgewertete, um den Einfluss der Höhendifferenz f des topografischen Oberflächenprofils 23 auf ein Messergebnis zu eliminieren oder zumindest zu reduzieren.

Die Bestimmung des mindestens einen geometrischen Merkmals der Bearbeitungsmarkierungen 12, weist das Bestimmen mehrerer Merkmale der nachfolgend aufgelisteten Merkmale auf: Höhendifferenz f der Bearbeitungsmarkierungen 12, Versatz V, Breite b1 Bearbeitungsmarkierungen, Länge l1 der Bearbeitungsmarkierungen.

Die Bestimmung mehrerer Merkmale der Bearbeitungsmarkierungen kann rechnerisch anhand einer Auswertung von Fertigungsparametern des Wälzfräsens erfolgen, kann alternativ oder ergänzend messtechnisch anhand einer Auswertung von Messdaten erfolgen oder kann alternativ oder ergänzend rechnerisch anhand einer Auswertung von Fertigungsparametern eines spanabhebenden Verzahnverfahrens vergleichbarer Bauteile erfolgen.

Die zur optischen Messung verwendete optische Messvorrichtung 120 ist ein optischer Abstandssensor zur optischen Distanzmessung, wobei der optische Abstandssensor ein Punktsensor ist, und zwar ein konfokal chromatischer Abstandssensor.

Vorliegend werden mittels der optischen Messung Profillinien P1 der Zahnflanken erfasst und anhand der Profillinien die Teilung P der Verzahnung 6 bestimmt.

Das Wälzfräsen ist eine Weichbearbeitung und das optische Messen der Verzahnung 3 des Bauteils 2 erfolgt vor einem Härten und/oder vor einer Hartfeinbearbeitung der Verzahnung 3 des Bauteils 2.

### Bezugszeichen

- 2: Bauteil / schrägverzahntes Stirnrad
- 3: Verzahnung
- 4: Wälzfräser
- 6: Zähne
- 8: Zahnflanke
- 8.1: Zahnflanke
- 8.2: Zahnflanke
- 8.3: Zahnflanke
- 10: Schneidzahn / Schneidzähne des Wälzfräsers
- 11: Schneide
- 12: Bearbeitungsmarkierung / Bearbeitungsmarkierungen
- 14: Vorschubmarkierung / Vorschubmarkierungen
- 16: Hüllschnittabweichung / Hüllschnittabweichungen
- 18: Fräserbahn
- 20: Fräserbahn
- 22: Messspirale
- 23: topografisches Oberflächenprofil
- 24: spiralförmige Anordnung
- 100: Koordinatenmessmaschine
- 110: taktile Messvorrichtung
- 120: optische Messvorrichtung
- B: Berg
- C: Drehachse
- M1: Messpunkt
- M2: Messpunkt
- M3: Messpunkt
- P: Teilung / Zahnteilung
- P1: Profillinie
- R: Rotationsachse
- T: Tal
- V: Versatz
- X: Koordinatenachse des Koordinatensystems X, Y, Z
- Y: Koordinatenachse des Koordinatensystems X, Y, Z
- Z: Koordinatenachse des Koordinatensystems X, Y, Z
- b: Zahnbreitenrichtung / Koordinatenachse des lokalen Koordinatensystems b, h, n
- h: Zahnhöhenrichtung / Koordinatenachse des lokalen Koordinatensystems b, h, n
- n: Zahnnormalenrichtung / Koordinatenachse des lokalen Koordinatensystems b, h, n
- b1: Breite
- d: Teilkreis
- f: Höhendifferenz
- l1: Länge
- (A): Verfahrensschritt
- (B): Verfahrensschritt
- (C): Verfahrensschritt

## Patentansprüche

1. Verfahren, mit den Verfahrensschritten:
- Bereitstellen eines Bauteils (2), wobei das Bauteil (2) eine Verzahnung (3) aufweist,
- wobei Zahnflanken (8) der Verzahnung Bearbeitungsmarkierungen (12) aufweisen,
- wobei die Bearbeitungsmarkierungen (12) durch eine Herstellung der Zahnflanken (8) mittels eines kontinuierlichen spanabhebenden Verzahnverfahrens unter Verwendung eines Werkzeugs (4) mit geometrisch bestimmten Schneiden (11) erzeugt worden sind, wie Wälzfräsen, Wälzschälen oder dergleichen,
- wobei die Bearbeitungsmarkierungen (12) an jeder der Zahnflanken (8) ein jeweiliges Oberflächenprofil (23) mit Bergen (B) und Tälern (T) ausbilden, das jeweils durch den periodischen Eingriff der Schneiden (11) während des kontinuierlichen spanabhebenden Verzahnverfahrens an den jeweiligen Zahnflanken (8) erzeugt worden ist,
- wobei eine jeweilige Position von Bergen (B) und Tälern (T) der Bearbeitungsmarkierungen (12) in Zahnbreitenrichtung (b) flankenspezifisch ist,
- wobei die Berge (B) und Täler (T) benachbarter Zahnflanken (8) bezüglich ihrer flankenspezifischen Position in Zahnbreitenrichtung (b) relativ zueinander einen Versatz (V) aufweisen und wobei der Versatz (V) infolge eines axialen Vorschubs des Werkzeugs (4) in Zahnbreitenrichtung (b) während des kontinuierlichen spanabhebenden Verzahnverfahrens erzeugt worden ist;
- Bestimmung mindestens eines geometrischen Merkmals der Bearbeitungsmarkierungen, wie der flankenspezifischen Positionen der Berge (B) und Täler (T), dem Versatz (V) oder dergleichen;
- Durchführung einer optischen Messung der Verzahnung (3) des Bauteils (3),
- wobei ein Verlauf eines Messwegs (22) für die optische Messung und/oder wobei Positionen von Messpunkten (M1, M2, M3) für die optische Messung unter Berücksichtigung des mindestens einen geometrischen Merkmals der Bearbeitungsmarkierungen (12) definiert werden
und/oder
- wobei eine Auswertung von Messwerten der optischen Messung unter Berücksichtigung des mindestens einen geometrischen Merkmals der Bearbeitungsmarkierungen (12) erfolgt.

2. Verfahren nach Anspruch 1,
**dadurch gekennzeichnet,**
- **dass** der Versatz (V) der flankenspezifischen Position der Berge (B) und Täler (T) benachbarter Zahnflanken (8) über den gesamten Umfang der Verzahnung (3) betrachtet eine spiralförmige Anordnung (24) der Bearbeitungsmarkierungen (12) ergibt,
- **dass** die Bestimmung des mindestens einen geometrischen Merkmals der Bearbeitungsmarkierungen (12) die Bestimmung einer Steigung (26) und einer Orientierung der spiralförmigen Anordnung (24) der Bearbeitungsmarkierungen (12) aufweist,
- **dass** die Durchführung der optischen Messung die Vorgabe des Messwegs (22) aufweist, wobei der Messweg (22) zumindest abschnittsweise als eine sich um die Verzahnung (3) windende Messspirale (22) definiert wird, wobei die Messspirale (22) eine Orientierung und eine Steigung (28) aufweist und
- **dass** die Steigung (28) und Orientierung der Messspirale (22) zumindest abschnittweise identisch zur Steigung (26) und Orientierung der spiralförmigen Anordnung (24) der Bearbeitungsmarkierungen (12) definiert wird und/oder zumindest abschnittweise abweichend von der Steigung (26) und/oder Orientierung der spiralförmigen Anordnung (24) der Bearbeitungsmarkierungen (12) definiert wird.

3. Verfahren nach Anspruch 2,
**dadurch gekennzeichnet,**
- **dass** die Bestimmung der Steigung (26) und Orientierung der spiralförmigen Anordnung (24) der Bearbeitungsmarkierungen (12) rechnerisch anhand einer Auswertung von Fertigungsparametern des spanabhebenden Verzahnverfahrens erfolgt
und/oder
- **dass** die Bestimmung der Steigung (26) und Orientierung der spiralförmigen Anordnung (24) der Bearbeitungsmarkierungen (12) messtechnisch anhand einer Auswertung von Messdaten erfolgt
und/oder
- **dass** die Bestimmung der Steigung (26) und Orientierung der spiralförmigen Anordnung (24) der Bearbeitungsmarkierungen (12) rechnerisch anhand einer Auswertung von Fertigungsparametern eines spanabhebenden Verzahnverfahrens vergleichbarer Bauteile erfolgt.

4. Verfahren nach einem der voranstehenden Ansprüche 2 oder 3,
**dadurch gekennzeichnet,**
- **dass** die Steigung (28) der Messspirale (22) zumindest abschnittsweise mehr als dem Doppelten der Steigung (26) der spiralförmigen Anordnung (24) der Bearbeitungsmarkierungen (12) entspricht oder
- **dass** die Steigung (28) der Messspirale (22) zumindest abschnittsweise weniger als der Hälfte der Steigung (26) der spiralförmigen Anordnung (24) der Bearbeitungsmarkierungen entspricht.

5. Verfahren nach einem der voranstehenden Ansprüche 2 bis 4,
**dadurch gekennzeichnet,**
- **dass** die Messspirale (22) bezogen auf eine Rotationsachse (R) der Verzahnung (3) einen Winkelbereich von 1080° oder weniger abdeckt, insbesondere, dass die Messspirale (22) bezogen auf eine Rotationsachse (R) der Verzahnung (3) einen Winkelbereich von 720° oder weniger abdeckt
und/oder
- **dass** die Messspirale (22) bezogen auf eine Zahnbreite der Verzahnung (3) 50% oder mehr der Zahnbreite der Verzahnung (3) abdeckt, insbesondere 75% oder mehr der Zahnbreite der Verzahnung (3) abdeckt.

6. Verfahren nach einem der voranstehenden Ansprüche,
**dadurch gekennzeichnet, dass**
- die Berge (B) und Täler eine Höhendifferenz (f) zueinander aufweisen, wobei die Höhendifferenz (f) in einer Richtung normal zu einer beim spanabhebenden Verzahnverfahren zu erzeugenden Sollgeometrie der Zahnflanke (8) gemessen wird, und
- dass die Auswertung von Messpunkten (M1, M2, M3) von Zahnflanke (8) zu Zahnflanke (8) entlang der Höhendifferenz (f) der Bearbeitungsmarkierungen (12) betrachtet für jede der Bearbeitungsmarkierungen (12) auf dergleichen Höhenposition einer jeweiligen Bearbeitungsmarkierung (12) der jeweiligen Zahnflanke (8) erfolgt
und/oder
- dass die Erfassung von Messpunkten (M1, M2, M3) von Zahnflanke (8) zu Zahnflanke (8) entlang der Höhendifferenz (f) der Bearbeitungsmarkierungen (12) betrachtet für jede der Bearbeitungsmarkierungen (12) auf dergleichen Höhenposition einer jeweiligen Bearbeitungsmarkierung (12) der jeweiligen Zahnflanke (8) erfolgt.

7. Verfahren nach Anspruch 6,
**dadurch gekennzeichnet, dass**
die Bestimmung des mindestens einen geometrischen Merkmals der Bearbeitungsmarkierungen (12) die Bestimmung der Höhendifferenz (f) der Berge (B) und Täler (T) aufweist.

8. Verfahren nach einem der voranstehenden Ansprüche,
**dadurch gekennzeichnet, dass**
- die Bestimmung des mindestens einen geometrischen Merkmals der Bearbeitungsmarkierungen (12) rechnerisch anhand einer Auswertung von Fertigungsparametern des spanabhebenden Verzahnverfahrens erfolgt
und/oder
- die Bestimmung des mindestens einen geometrischen Merkmals der Bearbeitungsmarkierungen (12) messtechnisch anhand einer Auswertung von Messdaten erfolgt
und/oder
- die Bestimmung des mindestens einen geometrischen Merkmals der Bearbeitungsmarkierungen (12) rechnerisch anhand einer Auswertung von Fertigungsparametern eines spanabhebenden Verzahnverfahrens vergleichbarer Bauteile erfolgt.

9. Verfahren nach einem der voranstehenden Ansprüche,
**dadurch gekennzeichnet, dass**
- zur optischen Messung ein optischer Abstandssensor zur optischen Distanzmessung verwendet wird,
- wobei der optische Abstandssensor ein Punktsensor ist, wie ein konfokal chromatischer Abstandssensor oder dergleichen.

10. Verfahren nach einem der voranstehenden Ansprüche,
**dadurch gekennzeichnet, dass**
- mittels der optischen Messung Profillinien (P1) der Zahnflanken (8) erfasst werden und
- anhand der Profillinien (P1) eine Teilung (P) der Verzahnung (3) bestimmt wird.

11. Verfahren nach einem der voranstehenden Ansprüche,
**dadurch gekennzeichnet,**
- **dass** das spanabhebende Verzahnverfahren eine Weichbearbeitung ist und/oder
- **dass** das optische Messen der Verzahnung (3) des Bauteils (2) vor einem Härten und/oder vor einer Hartfeinbearbeitung der Verzahnung (3) erfolgt
und/oder
- **dass** die Verzahnung (3) eine Schrägverzahnung ist.

## Claims

1. Method, having the method steps of:
- providing a component (2), wherein the component (2) has a gearing (3),
- wherein tooth flanks (8) of the gearing have machining marks (12),
- wherein the machining marks (12) have been produced by manufacturing the tooth flanks (8) by means of a continuous chip-removing gear cutting process using a tool (4) with geometrically defined cutting edges (11), such as hobbing, skiving or the like,
- wherein the machining marks (12) form a respective surface profile (23) with peaks (B) and valleys (T) on each of the tooth flanks (8), which has in each case been produced on the respective tooth flanks (8) by the periodic engagement of the cutting edges (11) during the continuous chip-removing gear cutting process,
- wherein a respective position of peaks (B) and valleys (T) of the machining marks (12) in the tooth width direction (b) is flank-specific,
- wherein the peaks (B) and valleys (T) of adjacent tooth flanks (8) have an offset (V) relative to one another with respect to their flank-specific position in the tooth width direction (b), and wherein the offset (V) has been produced as a result of an axial advance of the tool (4) in the tooth width direction (b) during the continuous chip-removing gear cutting process;
- determining at least one geometric feature of the machining marks, such as the flank-specific positions of the peaks (B) and valleys (T), the offset (V) or the like;
- carrying out an optical measurement of the gearing (3) of the component (3),
- wherein a course of a measuring path (22) for the optical measurement and/or wherein positions of measuring points (M1, M2, M3) for the optical measurement are defined taking into account the at least one geometric feature of the machining marks (12) and/or
- wherein an evaluation of measured values of the optical measurement is carried out taking into account the at least one geometric feature of the machining marks (12).

2. Method according to claim 1,
**characterized**
- **in that** the offset (V) of the flank-specific position of the peaks (B) and valleys (T) of adjacent tooth flanks (8) results in a spiral arrangement (24) of the machining marks (12) when viewed over the entire circumference of the gearing (3),
- **in that** the determination of the at least one geometric feature of the machining marks (12) comprises the determination of a gradient (26) and an orientation of the spiral arrangement (24) of the machining marks (12),
- **in that** the performance of the optical measurement comprises the specification of the measuring path (22), wherein the measuring path (22) is defined at least in sections as a measuring spiral (22) winding around the gearing (3), wherein the measuring spiral (22) has an orientation and a gradient (28), and
- **in that** the gradient (28) and orientation of the measuring spiral (22) is defined at least in sections identically to the gradient (26) and orientation of the spiral arrangement (24) of the machining marks (12) and/or is defined at least in sections differently from the gradient (26) and/or orientation of the spiral arrangement (24) of the machining marks (12).

3. Method according to claim 2,
**characterized**
- **in that** the gradient (26) and orientation of the spiral arrangement (24) of the machining marks (12) are determined by calculation using an evaluation of production parameters of the chip-removing gear cutting process
and/or
- **in that** the gradient (26) and orientation of the spiral arrangement (24) of the machining marks (12) are determined by measurement using an evaluation of measurement data and/or
- **in that** the gradient (26) and orientation of the spiral arrangement (24) of the machining marks (12) are determined by calculation using an evaluation of production parameters of a chip-removing gear cutting process of comparable components.

4. Method according to one of the preceding claims 2 or 3,
**characterized**
- **in that** the gradient (28) of the measuring spiral (22) corresponds at least in sections to more than twice the gradient (26) of the spiral arrangement (24) of the machining marks (12) or
- **in that** the gradient (28) of the measuring spiral (22) corresponds, at least in sections, to less than half the gradient (26) of the spiral arrangement (24) of the machining marks.

5. Method according to one of the preceding claims 2 to 4,
**characterized**
- **in that** the measuring spiral (22) covers an angular range of 1080° or less in relation to an axis of rotation (R) of the gearing (3), in particular that the measuring spiral (22) covers an angular range of 720° or less in relation to an axis of rotation (R) of the gearing (3) and/or
- **in that** the measuring spiral (22) covers 50% or more of the tooth width of the gearing (3) in relation to a tooth width of the gearing (3), in particular covers 75% or more of the tooth width of the gearing (3).

6. Method according to one of the preceding claims,
**characterized in that**
- the peaks (B) and valleys have a height difference (f) relative to one another, wherein the height difference (f) is measured in a direction normal to a nominal geometry of the tooth flank (8) to be produced in the chip-removing gear cutting process, and
- that the evaluation of measuring points (M1, M2, M3) from tooth flank (8) to tooth flank (8) is carried out along the height difference (f) of the machining marks (12) as viewed for each of the machining marks (12) at the same height position of a respective machining mark (12) of the respective tooth flank (8) and/or
- **in that** the detection of measuring points (M1, M2, M3) from tooth flank (8) to tooth flank (8) is carried out along the height difference (f) of the machining marks (12), as viewed for each of the machining marks (12) at the same height position of a respective machining mark (12) of the respective tooth flank (8).

7. Method according to claim 6,
**characterized in that**
the determination of the at least one geometric feature of the machining marks (12) comprises the determination of the height difference (f) of the peaks (B) and valleys (T).

8. Method according to one of the preceding claims, **characterized in that**
- the determination of the at least one geometric feature of the machining marks (12) is carried out by calculation on the basis of an evaluation of production parameters of the chip-removing gear cutting process
and/or
- the determination of the at least one geometric feature of the machining marks (12) is carried out metrologically using an evaluation of measurement data
and/or
- the determination of the at least one geometric feature of the machining marks (12) is carried out by calculation on the basis of an evaluation of production parameters of a chip-removing gear cutting process of comparable components.

9. Method according to one of the preceding claims,
**characterized in that**
- an optical distance sensor is used for optical distance measurement,
- wherein the optical distance sensor is a point sensor, such as a confocal chromatic distance sensor or the like.

10. Method according to one of the preceding claims,
**characterized in that**
- profile lines (P1) of the tooth flanks (8) are detected by means of the optical measurement and
- a pitch (P) of the gearing (3) is determined using the profile lines (P1).

11. Method according to one of the preceding claims,
**characterized**
- **in that** the gear cutting process is a soft machining process and/or
- **in that** the optical measurement of the gearing (3) of the component (2) takes place before hardening and/or before hard finishing of the gearing (3)
and/or
- **in that** the gearing (3) is helical gearing.

## Revendications

1. Procédé comprenant les étapes suivantes :
- fournir un composant (2), le composant (2) présentant une denture (3),
- les flancs de dents (8) de la denture présentant des marques d'usinage (12),
- les marques d'usinage (12) ayant été produites par la fabrication des flancs de dents (8) au moyen d'un procédé d'usinage continu des dentures à l'aide d'un outil (4) avec des tranchants (11) de géométrie définie, tel que le fraisage par génération, le skiving ou similaire,
- les marques d'usinage (12) formant sur chacun des flancs de dent (8) un profil de surface (23) respectif avec des crêtes (B) et des creux (T), qui a été généré respectivement par l'engagement périodique des tranchants (11) pendant le procédé d'usinage continu par enlèvement de copeaux sur les flancs de dent (8) respectifs,
- une position respective des crêtes (B) et des creux (T) des marques d'usinage (12) dans le sens de la largeur de dent (b) étant spécifique au flanc,
- les crêtes (B) et les creux (T) des flancs de dents adjacents (8) présentant un décalage (V) les uns par rapport aux autres en ce qui concerne leur position spécifique au flanc dans le sens de la largeur de dent (b), et le décalage (V) ayant été généré par une avance axiale de l'outil (4) dans le sens de la largeur de dent (b) pendant le processus continu d'usinage par enlèvement de copeaux;
- détermination d'au moins une caractéristique géométrique des marques d'usinage, telle que les positions spécifiques aux flancs des crêtes (B) et des creux (T), le décalage (V) ou similaire ;
- réalisation d'une mesure optique de la denture (3) du composant (3),
- un parcours de mesure (22) pour la mesure optique et/ou des positions de points de mesure (M1, M2, M3) pour la mesure optique étant définis en tenant compte de la au moins une caractéristique géométrique des marques d'usinage (12)
et/ou
- une évaluation des valeurs mesurées lors de la mesure optique est effectuée en tenant compte de la au moins une caractéristique géométrique des marques d'usinage (12).

2. Procédé selon la revendication 1,
**caractérisé en ce que**
- le décalage (V) de la position spécifique aux flancs des crêtes (B) et des creux (T) des flancs de dents adjacents (8) sur toute la circonférence de la denture (3) donne un agencement en spirale (24) des marques d'usinage (12),
- que la détermination d'au moins une caractéristique géométrique des marques d'usinage (12) comprend la détermination d'une pente (26) et d'une orientation de la disposition en spirale (24) des marques d'usinage (12),
- que la réalisation de la mesure optique comprend la définition du trajet de mesure (22), le trajet de mesure (22) étant défini au moins par sections comme une spirale de mesure (22) s'enroulant autour de la denture (3), la spirale de mesure (22) présentant une orientation et une pente (28) et
- que la pente (28) et l'orientation de la spirale de mesure (22) sont au moins par sections identiques à la pente (26) et l'orientation de la disposition en spirale (24) des repères d'usinage (12) et/ou sont définis au moins par sections de manière différente du pas (26) et/ou de l'orientation de la disposition en spirale (24) des repères d'usinage (12).

3. Procédé selon la revendication 2,
**caractérisé en ce**
**que** la détermination du pas (26) et de l'orientation de la disposition en spirale (24) des repères d'usinage (12) s'effectue par calcul à partir d'une évaluation des paramètres de fabrication du procédé d'usinage par enlèvement de copeaux
et/ou
- **que** la détermination du pas (26) et de l'orientation de la disposition hélicoïdale (24) des marques d'usinage (12) s'effectue par mesure à l'aide d'une évaluation des données de mesure et/ou
- **que** la détermination du pas (26) et de l'orientation de la disposition en spirale (24) des repères d'usinage (12) s'effectue par calcul à partir d'une évaluation des paramètres de fabrication d'un procédé d'usinage par enlèvement de copeaux de composants comparables.

4. Procédé selon l'une des revendications 2 ou 3 précédentes,
**caractérisé en ce que**
- le pas (28) de la spirale de mesure (22) correspond, au moins par sections, à plus du double du pas (26) de la disposition en spirale (24) des marques d'usinage (12) ou
- que le pas (28) de la spirale de mesure (22) correspond, au moins par sections, à moins de la moitié du pas (26) de la disposition en spirale (24) des marques d'usinage.

5. Procédé selon l'une des revendications 2 à 4 précédentes,
**caractérisé en ce que**
- que la spirale de mesure (22) couvre une plage angulaire de 1080° ou moins par rapport à un axe de rotation (R) de la denture (3), en particulier que la spirale de mesure (22) couvre une plage angulaire de 720° ou moins par rapport à un axe de rotation (R) de la denture (3) et/ou
- la spirale de mesure (22) couvre, par rapport à une largeur de dent de la denture (3), 50 % ou plus de la largeur de dent de la denture (3), en particulier 75 % ou plus de la largeur de dent de la denture (3).

6. Procédé selon l'une des revendications précédentes,
**caractérisé en ce que**
- les crêtes (B) et les creux présentent une différence de hauteur (f) les uns par rapport aux autres, la différence de hauteur (f) étant mesurée dans une direction normale à une géométrie de consigne du flanc de dent (8) à générer lors du procédé d'usinage par enlèvement de copeaux,
et
- l'évaluation des points de mesure (M1, M2, M3) du flanc de dent (8) au flanc de dent (8) le long de la différence de hauteur (f) des marques d'usinage (12) est effectuée pour chacune des marques d'usinage (12) à la même position en hauteur d'une marque d'usinage (12) respective du flanc de dent (8) respectif
et/ou
- que la détection des points de mesure (M1, M2, M3) d'un flanc de dent (8) à un flanc de dent (8) le long de la différence de hauteur (f) des marques d'usinage (12) est effectuée pour chacune des marques d'usinage (12) à la même position en hauteur d'une marque d'usinage (12) respective du flanc de dent (8) respectif.

7. Procédé selon la revendication 6,
**caractérisé en ce que**
la détermination d'au moins une caractéristique géométrique des marques d'usinage (12) comprend la détermination de la différence de hauteur (f) entre les crêtes (B) et les creux (T).

8. Procédé selon l'une des revendications précédentes,
**caractérisé en ce que**
- la détermination de la au moins une caractéristique géométrique des marques d'usinage (12) s'effectue par calcul à partir d'une évaluation des paramètres de fabrication du procédé d'usinage par enlèvement de copeaux
et/ou
- la détermination de la au moins une caractéristique géométrique des marques d'usinage (12) s'effectue par mesure à partir d'une évaluation des données de mesure et/ou
- la détermination de la au moins une caractéristique géométrique des marques d'usinage (12) s'effectue par calcul à partir d'une évaluation des paramètres de fabrication d'un procédé d'usinage par enlèvement de copeaux de composants comparables.

9. Procédé selon l'une des revendications précédentes,
**caractérisé en ce que**
- un capteur de distance optique est utilisé pour la mesure optique de la distance,
- le capteur de distance optique étant un capteur ponctuel, tel qu'un capteur de distance chromatique confocal ou similaire.

10. Procédé selon l'une des revendications précédentes,
**caractérisé en ce que**
- les lignes de profil (P1) des flancs de dents (8) sont détectées au moyen de la mesure optique et
- un pas (P) de la denture (3) est déterminé à partir des lignes de profil (P1).

11. Procédé selon l'une des revendications précédentes,
**caractérisé en ce que**
- le procédé d'usinage par enlèvement de copeaux est un usinage doux et/ou
- la mesure optique de la denture (3) du composant (2) est effectuée avant un durcissement et/ou avant un usinage de précision de la denture (3)
et/ou
- la denture (3) est une denture hélicoïdale.
